# EUROPÄISCHE PATENTANMELDUNG

(11) **EP 0 681 134 A1**
(43) Veröffentlichungstag der Anmeldung: **08.11.1995**
(21) Anmeldenummer: 94110883.9
(22) Anmeldetag: 13.07.1994
(51) Int. Cl.: F16L 5/02, H02G 3/22, E04B 1/66

(54) **Vorrichtung zur Durchführung von Leitungen durch eine Wandöffnung**

(71) Anmelder: Hauff, Werner, D-89561 Ballmertshofen (DE)
(72) Erfinder: Hauff, Werner, D-89561 Ballmertshofen (DE)
(74) Vertreter: Fay, Hermann, Dipl.-Phys. Dr.

(57) **Zusammenfassung**

Die Vorrichtung zur Durchführung von Leitungen besitzt ein in die Wandöffnung (2) einsetzbares Futterrohr (3), dessen Wandung eine die Leitungen (1) aufnehmende Durchgangsöffnung (4) umschließt und einen Hohlraum (8) aufweist, in dem sich, getrennt voneinander, die Komponenten (9, 10) eines bei ihrer Durchmischung expandierenden und im expandierten Zustand sich verfestigenden Mehrkomponenten-Kunststoffschaums befinden. Ferner ist im Hohlraum 8 eine von außen betätigbare Vorrichtung (26, 28) zur Vereinigung und Durchmischung der Komponenten (9, 10) vorgesehen. In der Wandung des Futterrohrs (3) befindet sich mindestens eine, mit dem Hohlraum (8) in Verbindung stehende und nach außen mündende Austrittsöffnung (13), durch die der entstehende und expandierende Kunststoffschaum aus dem Hohlraum (8) nach außen austritt und die Durchgangsöffnung (4) wie auch den Ringraum (11) zwischen der Wand (5) und dem Futterrohr verschließt.

## Beschreibung

Die Erfindung betrifft eine Vorrichtung zur Durchführung von Leitungen, wie Kabel oder Rohre, durch eine Wandöffnung mit einem in die Wandöffnung einsetzbaren Futterrohr dessen Wandung eine zu beiden Seiten der Wand mündende und die Leitungen aufnehmende Durchgangsöffnung umschließt.

Bei einer aus DE 36 23 547 C1 bekannten Vorrichtung dieser Art ist das Futterrohr zur Abdichtung gegen die Wand innerhalb der Wandöffnung über eine vorgegebene Länge von einer gespannten Schraubenfeder umgeben, zwischen deren Gängen Dichtungsmasse eingelagert ist. Die Schraubenfeder ist von außen entspannbar. Die Dichtungsmasse wird zwischen den Gängen der sich entspannenden Schraubenfeder axial zusammengedrückt und dabei radial sowohl gegen die Wandung des Futterrohrs als auch gegen die Reibungsfläche der Wandöffnung unter Bildung einer Dichtungsmanschette gedrückt. - Diese bekannte Vorrichtung ergibt eine Abdichtung nur innerhalb der Wandöffnung und axial nur über die Länge der Schraubenfeder im entspannten Zustand. Die lichte Weite der Wandöffnung muß dem Außenquerschnitt des Futterrohres eng angepaßt sein, da sonst die zur Verfügung stehende Menge der Dichtungsmasse nicht ausreicht, den Zwischenraum zwischen dem Futterrohr und der Wand zuverlässig zu schließen. Im übrigen können bei der Herstellung der Wandöffnung, insbesondere wenn dazu die Wand durchschlagen werden muß, an der Wandaußenseite Ausbrüche auftreten, die dann auf jeden Fall behoben werden müssen, wenn sie unter der Erdoberfläche liegende Isolier- oder Dämmschichten auf der Wandaußenseite betreffen. Die bekannte Vorrichtung ermöglicht keine Abdichtung solcher Ausbrüche. Sie ist auch nur für Futterrohre von im wesentlichen kreisförmigem Querschnitt geeignet, und schließlich erfordert sie immer zusätzliche Maßnahmen, um die von der Vorrichtung aufgenommenen Leitungen gegen das Futterrohr abzudichten.

Der Erfindung liegt die Aufgabe zugrunde, eine Vorrichtung der eingangs genannten Art so auszubilden, daß nach der Aufnahme des Futterrohrs in der Wandöffnung und der Leitungen im Futterrohr die Wandöffnung gegen das Futterrohr und zugleich das Futterrohr gegen die Leitungen in einfacher Weise zuverlässig abgedichtet werden können.

Diese Aufgabe wird nach der Erfindung bei einer Vorrichtung mit den eingangs genannten Merkmalen dadurch gelöst, daß die Wandung des Futterrohrs einen Hohlraum aufweist, in dem sich, getrennt voneinander, die Komponenten eines bei ihrer Durchmischung expandierenden und im expandierten Zustand sich verfestigenden Zwei- oder Mehrkomponenten-Kunststoffschaums befinden, daß ferner im Hohlraum eine von außen betätigbare Vorrichtung zur Vereinigung und Durchmischung der Komponenten vorgesehen ist, und daß in der Wandung des Futterrohrs mindestens eine, mit dem Hohlraum in Verbindung stehende und nach außen mündende Austrittsöffnung vorgesehen ist, durch die der entstehende und expandierende Kunststoffschaum aus dem Hohlraum nach außen austritt, wobei die Austrittsöffnung so am Futterrohr angeordnet ist, daß der austretende Kunststoffschaum sowohl die Durchgangsöffnung als auch den Ringraum zwischen der Wand und dem Futterrohr verschließt.

Der im Rahmen der Erfindung zum Einsatz kommende, an sich bekannte Kunststoffschaum aus zumeist nur zwei Komponenten, vergrößert beim Aufschäumen sein Volumen im Vergleich zu dem seiner Komponenten im ungemischten Zustand um einen sehr großen Faktor, bis beispielsweise 80, wobei er sich unter dem Blähdruck in alle Richtungen verteilen kann und auch in sonst nicht oder nur schwer zugängliche Hohlräume eindringt, die damit sicher abgedichtet werden. Infolge der starken Volumenvergrößerung reicht die Schaummenge ohne weiteres aus, sowohl den Ringraum zwischen der Wand und dem Futterrohr als auch das Futterrohr innenseitig gegen die Leitungen zu schließen und abzudichten, sowie darüberhinaus Ausbrüche an der Wandaußenseite zu füllen und dort die Isolier- oder Dämmfunktion wieder herzustellen. Diese Abdichtung ist völlig unabhängig von den Querschnittsformen der Wandöffnung und des Futterrohrs, die im Rahmen der Erfindung somit beliebig gewählt werden können. Die Anordnung der Schaumkomponenten im Hohlraum der Futterrohrwandung bietet weiterhin den Vorteil, daß es keines weiteren umständlichen Arbeitsgangs bedarf, den Schaum in die Wandöffnung einzubringen, und daß nach der Montage der Vorrichtung und der Schaumexpansion keine Abfallrückstände verbleiben, wie es etwa der Fall wäre, würde man den Schaum aus gesonderten Schaumpatronen in die Wandöffnung und in die Durchgangsöffnung einbringen wollen.

Im allgemeinen können die Austrittsöffnungen immer offen sein, soweit die Komponenten des Kunststoffschaums nicht nur voneinander getrennt, sondern auch jeder für sich selbst in eigene, zum Zwecke der Durchmischung der Komponenten leicht zerstörbare Behältnisse, wie Beutel, Folien oder dergleichen eingeschlossen sind, und soweit die Durchmischung der Komponenten im Hohlraum bei offener Austrittsöffnung möglich ist. Nur wenn die Mischung noch kurz bis zum Aufschäumen eingeschlossen bleiben müßte, empfiehlt es sich, die Austrittsöffnung mit einem sich unter dem Druck des expandierenden Kunststoffschaums öffnenden Verschluß zu versehen. Im übrigen wird man vorzugsweise die Austrittsöffnung mit oder ohne Verschluß zu mehreren in über die Wandung des Futterrohrs verteilter Anordnung vorsehen, wobei die Verteilung der Austrittsöffnungen im einzelnen selbstverständlich das Eindringen des Kunststoffschaums in alle zu schließenden Räume inner- und außerhalb des Futterrohrs sehr begünstigen kann.

Das Futterrohr kann im wesentlichen starr ausgebildet sein, wenn es keiner Anpassung an sich von Fall zu Fall ändernden Verlauf der Leitungen bedarf. Jedoch besteht im Rahmen der Erfindung auch mit Vorteil die Möglichkeit, daß das Futterrohr flexibel und entsprechend einem gekrümmten Verlauf der Leitungen biegbar ist.

Im allgemeinen wird man die Anordnung so treffen, daß das Futterrohr aus zwei ineinander angeordneten Rohren unterschiedlichen Durchmessers gebildet ist, die zwischen sich den im Querschnitt ringförmigen und an den Enden der Rohre geschlossenen Hohlraum einschließen. Dabei können die beiden Rohre sieb- oder netzartige Rohrwände aufweisen, wobei die Sieb- oder Maschenöffnungen die Austrittsöffnungen bilden. Eine andere sehr vorteilhafte Ausführungsform ist dadurch gekennzeichnet, daß die beiden Rohre zumindest im Bereich eines ihrer Enden einen formstabilen Querschnitt besitzen und dort durch einen ringförmigen Rohrboden verbunden sind, der den Hohlraum zwischen den Rohren abschließt. Die Austrittsöffnungen sind vorzugsweise in der Wand des inneren und des äußeren Rohres vorgesehen. Im einzelnen empfiehlt es sich, die Austrittsöffnungen über den Umfang und zumindest über den mittleren Bereich der Längserstreckung der Rohre verteilt anzuordnen, um die gleichmäßige Ausbreitung des entstehenden Kunststoffschaums zu begünstigen. Auch kann es sich stattdessen oder zusätzlich empfehlen, die Austrittsöffnungen im Rohrboden vorzusehen, wenn der Rohrboden sich an den zur Wandaußenseite hingewandten Rohrenden des Futterrohrs befindet. Durch diese Austrittsöffnungen im Rohrboden austretender Kunststoffschaum ist besonders leicht in der Lage, die schon früher erwähnten Ausbrüche an der Wandaußenseite zu verfüllen und zu reparieren. Soweit in allen diesen Fällen ein vorheriger Verschluß der Austrittsöffnungen erforderlich ist, kann der Verschluß jeweils durch in den Austrittsöffnungen sitzende und unter dem Druck des expandierenden Kunststoffschaums aus den Austrittsöffnungen herausdrückbare Stopfen gebildet sein. - Eine weitere sehr vorteilhafte Ausführungsform ist dadurch gekennzeichnet, daß die Austrittsöffnung von der ringförmigen Mündung des Hohlraums am einen Ende der Rohre und der Verschluß von dem an dieser Mündung befindlichen Rohrboden gebildet ist, der unter dem Druck des expandierenden Kunststoffschaums von den Rohrenden abdrückbar ist. Dabei kann der Rohrboden entweder abgedichtet gegen die Rohrwände zwischen den Rohren nach Art eines Kolbenrings verschiebbar geführt oder durch eine gegen die Rohrwände abdichtende, verschiebbar über das Ende der Rohre gestülpte Ringkappe gebildet sein.

Nach einer weiter bevorzugten Ausführungsform ist an dem von außerhalb der Wand auf der Wandinnenseite zugänglichen, also an dem dem Rohrboden gegenüberliegenden Ende des Futterrohrs ein die Durchgangsöffnung abdeckender Verschlußdeckel mit einem Durchlaß für die Leitungen vorgesehen. Dabei besteht der Verschlußdeckel vorteilhafterweise aus elastisch verformbarem Material und der Durchlaß ist von flexiblen Zungen gebildet, die durch vom Mittelpunkt ausgehende und nach außen verlaufende Schlitze im Verschlußdeckel freigeschnitten sind. Dieser Verschlußdeckel dient vor allem als Barriere für den Kunststoffschaum, die verhindert, daß der expandierende Kunststoffschaum die Wandöffnung und die Durchgangsöffnung zur Wandinnenseite hin verlassen kann, wodurch er für die Abdichtungsfunktion verloren ginge und es im übrigen zusätzlicher Arbeiten bedürfte, um den ausgetretenen Kunststoffschaum wieder zu beseitigen. Durch die flexible Ausführung der Zungen können diese sich den Leitungen anschmiegen und so zur Abdichtung des Verschlußdeckels gegen die Leitungen beitragen. Um den Verschlußdeckel einfach auf dem Futterrohr befestigen zu können, empfiehlt es sich, daß der Verschlußdeckel auf der dem Futterrohr zugewandten Seite einen Ringflansch aufweist, mit dem der Verschlußdeckel auf das Futterrohr aufgesteckt werden kann. Da der Querschnitt der Wandöffnung zumeist unregelmäßig geformt ist, ist es weiter von Vorteil, wenn der Ringflansch zum Abdichten des Ringraums zwischen dem äußeren Rohr und der Wand ausgebildet ist und dazu aus elastisch verformbarem Material besteht. Dann kann sich der Ringflansch erforderlichenfalls dem jeweiligen Querschnitt der Wandöffnung anpassen und unter Druck in den Ringraum gepresst werden, wodurch die Abdichtung des Ringraums an der Wandinnenseite gefördert wird. Zur Abdichtung kann im übrigen zweckmäßigerweise beitragen, daß der Verschlußdeckel einen größeren Außenquerschnitt als der Innenquerschnitt der Wandöffnung aufweist. Es ergibt sich dadurch auch der Vorteil, daß der Verschlußdeckel den Rand der Wandöffnung radial übergreift und ihn abdeckt. Um dabei aber sicherzustellen, daß beim Aufschäumen des Kunststoffschaums im Ringraum verdrängte Luft durch den Verschlußdeckel entweichen kann, sind der Ringflansch und der Verschlußdeckel zweckmäßigerweise von Entlüftungslöchern durchsetzt.

Der Verschlußdeckel kann auch zur Abdichtung des Hohlraum im Futterrohr an dem dem Verschlußdeckel zugewandten Ende des Futterrohrs Verwendung finden. Diese Abdichtung kann dadurch verbessert werden, daß an dem den Verschlußdeckel aufweisenden Ende des Futterrohrs zwischen dem inneren und dem äußeren Rohr ein den Hohlraum abdichtender Verschlußring angeordnet ist, der nicht unbedingt fest mit dem Verschlußdeckel verbunden sein muß.

Für die Funktion der erfindungsgemäßen Vorrichtung ist es wesentlich, daß die Komponenten des Kunststoffschaums nicht vorzeitig miteinander in Kontakt kommen. Eine entsprechende Trennung der Schaumkomponenten kann auf einfache Weise dadurch erreicht werden, daß die Komponenten des Kunststoffschaums in axialer und/oder radialer Richtung des Futterrohrs geschichtet oder räumlich ineinander angeordnet und durch leicht zerreißbare Folien voneinander getrennt sind. Dabei können die Folien jeweils geschlossene, nur eine der Schaumkomponenten aufnehmende Beutel bilden. Die Vorrichtung zur Vereinigung und Durchmischung der Komponenen umfaßt vorzugsweise ein den Hohlraum über seinen gesamten Bereich überstreichendes Mischorgan, daß von außen bewegbar oder zu seiner Bewegung von außen auslösbar ist, und das bei Bewegung die Folien zerreißt und die Komponenten im Hohlraum miteinander vermischt. Das Mischorgan kann es beispielsweise an einen zunächst gespannten Federantrieb angeschlossen sein der zur Bewegung des Mischorgans und für den Mischvorgang ausgelöst wird. Einfacher und daher bevorzugt aber ist eine Ausführungsform, bei der das Mischorgang am Ende mindestens eines in den Hohlraum hineinragenden und von außerhalb des Hohlraums betätigbaren Stabes angeordnet ist. Das Mischorgan ist dabei zweckmäßigerweise als zwischen dem inneren und dem äußeren Rohr axial verschiebbare Ringscheibe ausgebildet, die mit Spitzen oder Schneiden versehen sein kann, die das Zerreißen der die Komponenten einschließenden bzw. voneinander trennenden Folien erleichtern. Auch können bei axial bewegtem Mischorgan axiale Durchgangsöffnungen im Mischorgan vorgesehen sein, durch die bei der Mischorganbewegung die Komponenten bzw. Komponentenmischung hindurchtreten können und der Mischvorgang gefördert wird. Soweit die Vorrichtung mit dem schon erwähnten Verschlußdeckel und Verschlußring ausgestattet ist, kann der Stab in Längsrichtung verschiebbar durch eine Öffnung im Verschlußdeckel und im Verschlußring geführt sein. Im Verschlußring kann eine die Öffnung umgebende Ringnut vorgesehen sein, in die ein den Stab umgreifender und damit den Hohlraum des Futterrohres an dieser Öffnung abdichtender O-Ring eingesetzt ist. Soweit das Futterrohr, wie schon früher erwähnt, flexibel und biegbar ausgebildet ist, ist entsprechend auch der Stab biegsam ausgebildet, um bei seiner Bewegung dem axialen Verlauf des Futterrohres folgen zu können. Im übrigen empfiehlt es sich, nicht nur einen einzigen Stab, sondern mehrere Stäbe in über den Umfang des Futterrohres verteilter Anordnung vorzusehen, die eine bessere Führung und Handhabung des Mischorgans ermöglichen.

Das Futterrohr kann in Umfangsrichtung einstückig ausgebildet sein, was voraussetzt, daß das Futterrohr axial über die Leitungen geschoben werden kann. Sollte dies nicht möglich sein, empfiehlt sich im Rahmen der Erfindung eine Ausführungsform, die dadurch gekennzeichnet ist, daß das Futterrohr längs einer Axialebene in Rohrschalen unterteilt und die Rohrschalen lösbar miteinander verbunden sind. Die Rohrschalen können dann von der Seite her über die bereits liegenden Leitungen zusammengesetzt werden, wobei es sich empfiehlt, daß die Rohrschalen an ihren Längsrändern in einer Nut- und Federverbindung zusammensteckbar und in zusammengestecktem Zustand durch das Futterrohr außen umschließende Spannbänder zusammengehalten und gegeneinander verspannt sind.

Im folgenden wird die Erfindung an in der Zeichnung dargestellten Ausführungsbeispielen näher erläutert; es zeigen:
- Fig. 1: einen Längsschnitt durch eine in eine Wandöffnung eingesetzte erfindungsgemäße Vorrichtung,
- Fig. 2: eine andere Ausführungsform der Erfindung in einer der Fig. 1 entsprechenden Darstellung,
- Fig. 3: eine Draufsicht auf die Vorrichtung nach Fig. 2 in Richtung des Pfeiles III,
- Fig. 4: eine nochmals andere Ausführungsform der erfindungsgemäßen Vorrichtung in einer den Fig. 1 und 2 entsprechenden Darstellung und
- Fig. 5: eine andere Ausführungsform der erfindungsgemäßen Vorrichtung mit flexiblem in einer Darstellung entsprechend den Fig. 1, 2 und 4.

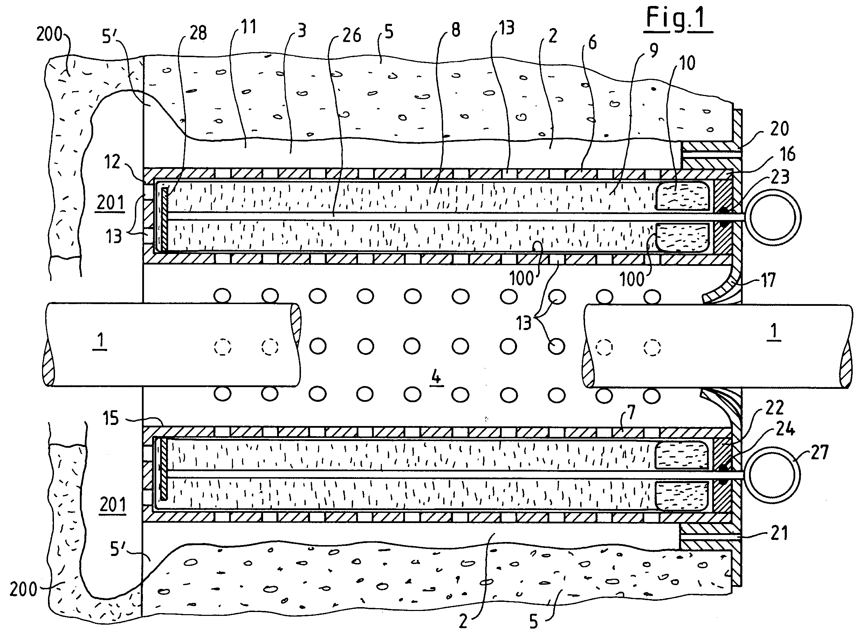

Die gezeigten Vorrichtungen zur Durchführung einer Leitung 1, wie Kabel oder Rohr, durch eine Öffnung 2 in einer Wand 5 sind in der Zeichnung in noch unfertig montiertem Zustand dargestellt, in dem die Schaumkomponenten 9, 10 noch voneinander getrennt im Hohlraum 8 enthalten sind und das in die Wandöffnung 2 eingesetzte Futterrohr 3 mit einer die Leitung 1 aufnehmenden Durchgangsöffnung 4 noch nicht gegen die Wand 5 und die Leitung 1 abgedichtet ist, so daß der Ringraum 11 zwischen der Wand 5 und dem Futterrohr 3 noch offen ist. Das Futterrohr 3 mündet an beiden Seiten der Wand 5, wobei in den Fig. 1, 2, 4 und 5 davon ausgegangen ist, daß die rechte Seite die Gebäudeinnenseite und die linke Seite die Gebäudeaußenseite mit dort anstehendem Erdreich 200 ist. Letzteres kann im Bereich der Wandöffnung 2 von den Durchbruchsarbeiten her noch Höhlungen 201 bilden. Auch können Ausbrüche 5' der Wand 5 im Bereich des Randes der Wandöffnung 2 auf der Wandaußenseite verblieben sein. Das Futterrohr 3 besteht aus zwei ineinander angeordneten Rohren 6, 7 unterschiedlichen Durchmessers, die zwischen sich den Hohlraum 8 einschließen, und ist an dem der Außenseite der Wand 5 entsprechenden axialen Ende durch einen die Rohre 6, 7 miteinander verbindenden ringförmigen Rohrboden 12 abgeschlossen. In dem Hohlraum 8 befinden sich getrennt voneinander die beiden Komponenten 9, 10 eines bei der Durchmischung der Komponenten expandierenden und im expandierten Zustand sich verfestigenden Zwei-Komponenten- Kunststoff-Schaums. Weiterhin ist im Hohlraum 8 eine von der Innenseite der Wand 5 her betätigbare Vorrichtung 26, 28 zur Vereinigung und Durchmischung der beiden Komponenten 9, 10 vorgesehen. Der Hohlraum 8 besitzt Austrittsöffnungen 13, durch die der nach der Vermischung seiner Komponenten 9, 10 expandierende Kunststoffschaum nach außen austritt, welcher Zustand in der Zeichnung aber nicht dargestellt ist. Jedenfalls sind die Austrittsöffnungen 13 im allgemeinen so am Futterrohr 3 angeordnet, daß der austretende Schaum sowohl die Durchgangsöffnung 4 als auch den Ringraum 11 schließt. Dabei ist wichtig, daß der Schaum an der Wandaußenseite auch axial aus dem Futterrohr 3, in der Zeichnung also nach links, in die Höhlung 201 sowie in die Ausbrüche 5' eindringen und diese verfüllen kann, wodurch im Ergebnis eine zuverlässige Abdichtung erreicht wird.

In dem in Fig. 1 gezeigten Ausführungsbeispiel sind die Austrittsöffnungen 13 in der Wand des inneren Rohrs 7 und des äußeren Rohrs 6 ausgebildet, die durch in der Zeichnung nicht dargestellte Stopfen verschlossen sein können, welche nach der Durchmischung der Komponenten 9, 10 durch den dann entstehenden Blähdruck aus den Austrittsöffnungen 13 herausgedrückt werden, so daß der Schaum austreten kann. Die Austrittsöffnungen 13 sind gleichmäßig über den Umfang der Rohre 6, 7 und zumindest über deren in Längserstreckung mittleren Bereich verteilt. Weitere Austrittsöffnungen 13 befinden sich auch im Rohrboden 12, wobei diese weiteren Austrittsöffnungen ebenfalls mit Stopfen versehen sein können.

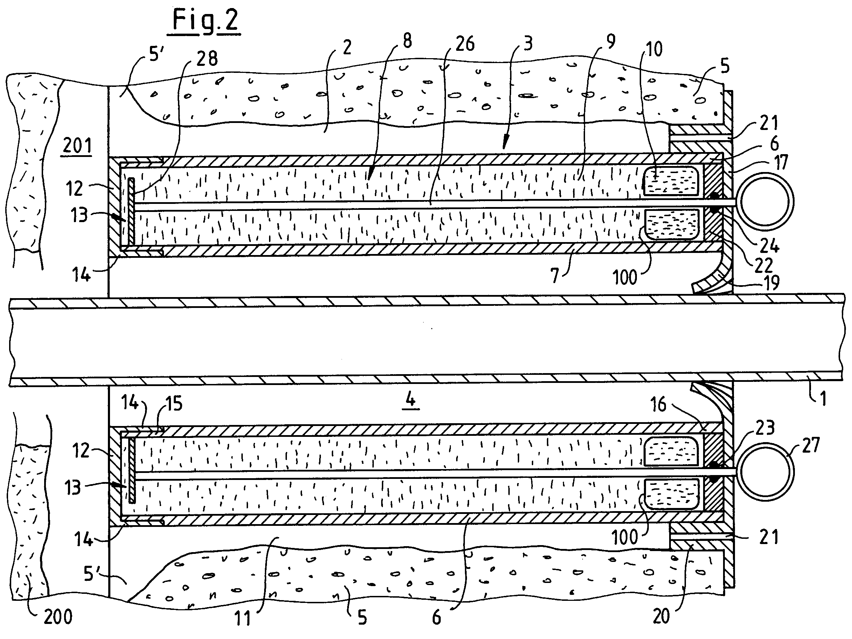

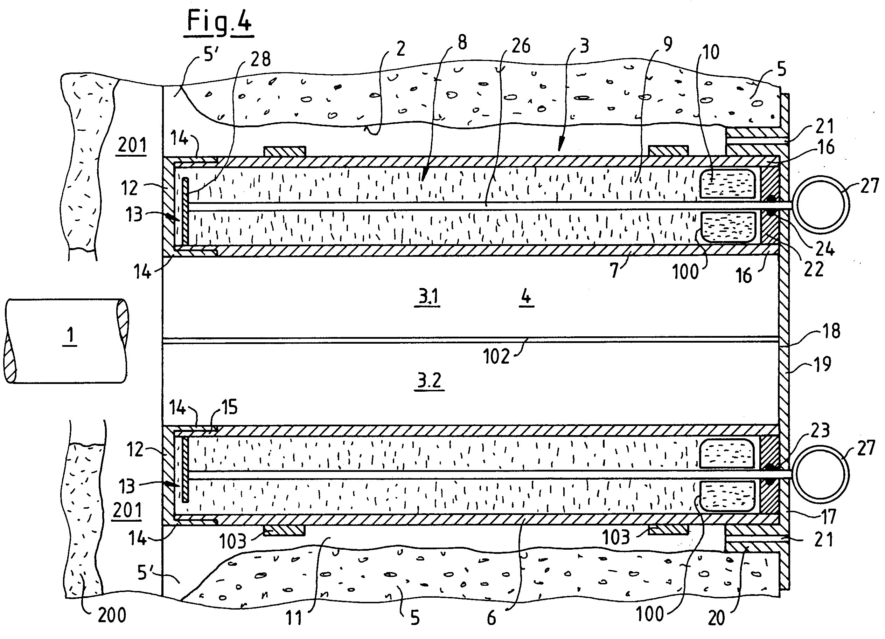

Statt einen unlösbar mit den Rohren 6, 7 verbundenen Rohrboden 12 vorzusehen, ist bei den in den Fig. 2 und 4 gezeigten Ausführungsformen der Rohrboden 12 durch eine gegen die Rohrwände abdichtende Ringkappe 14 gebildet, die lösbar auf das Ende 15 der Rohre 6, 7 gesteckt ist und durch den expandierenden Schaum von den Rohrenden 15 abgedrückt werden kann. Der Schaum tritt dann zunächst aus dem Hohlraum 8 durch den von der abgedrückten Ringkappe 14 freigegebenen, die Austrittsöffnung 13 bildenden Ringspalt zwischen den Rohren 6, 7 in die Höhlung 201 aus und füllt von dort aus die Durchgangsöffnung 4 und den Ringraum 11. Bei einer anderen, in der Zeichnung nicht dargestellten Ausführungsform kann der lösbare Rohrboden 12 auch durch einen zwischen die Rohre 6, 7 verschiebbar eingesetzten und gegen die Rohrwände abdichtenden Kolbenring gebildet sein, der unter dem Druck des expandierenden Schaums aus dem Hohlraum 8 in die Höhlung 201 herausgepresst wird. In jedem Fall aber setzt die Verwendung eines lösbaren Rohrbodens 12 voraus, daß die beiden Rohre 6, 7 zumindest im Bereich dieses Endes 15 einen formstabilen Querschnitt besitzen, so daß sich der Rohrboden 12 nicht auf bzw. in den Rohren 6, 7 verklemmen und dann den Hohlraum 8 nicht mehr freigeben kann.

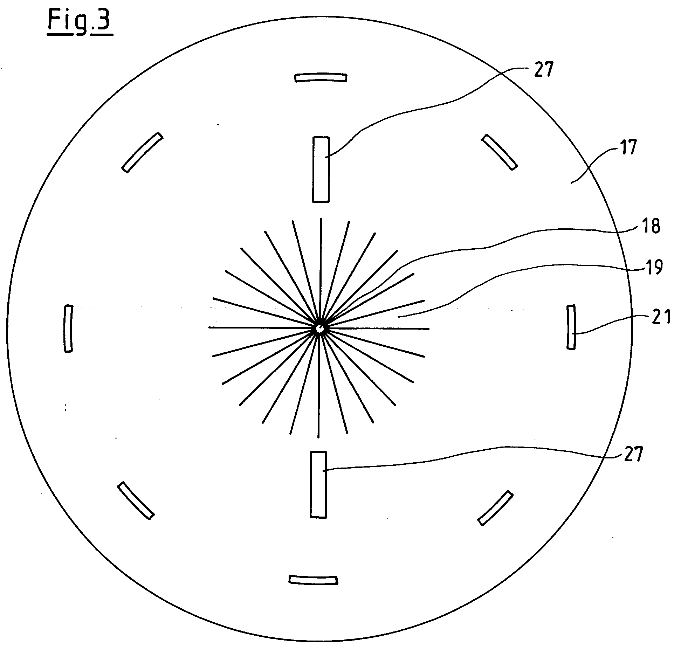

An der Wandinnenseite, also an dem dem Rohrboden 12 oder der Ringkappe 14 gegenüberliegenden Ende 16 des Futterrohrs 3 ist ein die Durchgangsöffnung 4 abdeckender Verschlußdeckel 17 angeordnet. Dieser Verschlußdeckel 17 besteht aus elastisch verformbarem Material und bildet für die Leitung 1 einen Durchlaß aus flexiblen Zungen 19, die durch vom Mittelpunkt 18 des Verschlußdeckels 17 ausgehende und nach außen verlaufende Schlitze im Verschlußdeckel freigeschnitten sind, wie dies im einzelnen aus Fig. 3 ersichtlich ist. Die Zungen 19 legen sich flexibel der Leitung 1 an und verhindern, daß Schaum aus der Durchgangsöffnung 4 an der Wandinnenseite aus dem Futterrohr 3 austritt. Weiter ist am Verschlußdeckel 17 auf der dem Futterrohr 3 zugewandten Seite ein Ringflansch 20 angeordnet, der zum Aufstecken des Verschlußdeckels 17 auf das Futterrohr 3 dient und gleichfalls aus elastisch verformbarem Material besteht, so daß er in den Ringraum 11 eingedrückt werden kann und diesen so verschließt, daß aus dem Ringraum 11 kein Schaum an der Wandinnenseite austreten kann. Der Verschlußdeckel 17 kann mit dem Ringflansch 20 einstückig ausgebildet sein und besitzt einen größeren Durchmesser als die Wandöffnung 2, so daß der Verschlußdeckel 17 auch den zumeist unregelmäßig geformten Rand der Wandöffnung 2 abdeckt. Im Ringflansch 20 und im Verschlußdeckel 17 sind Entlüftungslöcher 21 vorgesehen, die eine Verbindung zwischen dem Ringraum 11 und dem Außenraum herstellen, so daß im Ringraum 11 vor dem sich ausbreitenden Schaum die Luft durch die Löcher 21 entweichen und sich innerhalb des Ringraums kein dem Blähdruck des Kunststoffschaums entgegenwirkender Gegendruck aufbauen kann. Zusätzlich zum Verschlußdeckel 17 ist am wandinnenseitigen Ende 16 des Futterrohrs 3 zwischen dem inneren Rohr 7 und dem äußeren Rohr 6 noch ein den Hohlraum 8 abschließender und abdichtender Verschlußring 22 angeordnet.

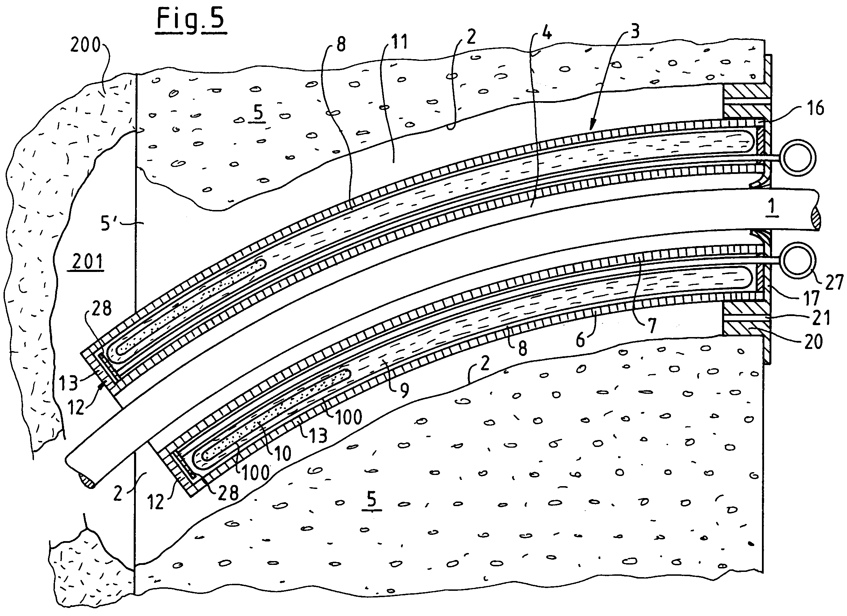

Die zwei Komponenten 9, 10 des Kunststoffschaums können im Hohlraum in axialer Richtung (Fig. 1, 2 und 4), aber auch in radialer Richtung geschichtet oder, wie in Fig. 5, räumlich ineinander angeordnet sein, wobei sie jeweils durch leicht zerreißbare Folien 100 eingeschlossen und voneinander getrennt sind. Sind alle Komponenten 9, 10 des Kunststoffschaums in solche Folien 100 eingeschlossen, wie es die Fig. 1 und 5 zeigen, können die Austrittsöffnungen 13 offen sein, weil, solange die Folien 100 unversehrt sind, keine der Komponenten 9, 10 aus dem Hohlraum 8 austreten kann. Ist dagegen bei einem Zweikomponentenschaum nur eine der Komponenten, nämlich in den Fig. 2 und 4 die Komponente 10 in eine Folie 100 eingeschlossen, sind die Austrittsöffnungen 13 zunächst verschlossen und öffnen sich erst unter dem Blähdruck des expandierenden Kunststoffschaums.

Die Vorrichtung zur Vereinigung und Durchmischung der Komponenten 9, 10 besitzt ein den Hohlraum 8 über seinen gesamten Bereich überstreichendes Mischorgan 28. Dieses Mischorgan zerreißt bei seiner Bewegung die Folien 100 und vermischt im gesamten Volumen des Hohlraums 8 die Komponenten 9, 10 miteinander. Das Mischorgan 28 kann in verschiedener Weise ausgebildet sein, beispielsweise von der Wandinnenseite her von Hand betätigt werden. Es besteht aber auch die nicht dargestellte Möglichkeit, das Mischorgan 28 von einer vorgespannten Feder bewegen zu lassen, die aus ihrem vorgespannten Zustand ausgelöst wird und bei ihrer Entspannungsbewegung die Komponenten 9, 10 freisetzt und vermischt. Das Mischorgan 28 kann sich dabei im Prinzip axial und/oder radial im Hohlraum 8 bewegen. In den Ausführungsbeispielen ist das Mischorgan 28 eine zwischen dem inneren Rohr 7 und dem äußeren Rohr 6 axial verschiebbare Ringscheibe, die mit im einzelnen nicht dargestellten Spitzen oder Schneiden zum leichteren Zerreißen der Folien 100 versehen sein kann. Diese Ringscheibe ist axial über die gesamte Länge des Hohlraums 8 bewegbar und dazu am Ende von zwei in den Hohlraum 8 hineinragenden und von außerhalb des Hohlraums betätigbaren Stäben 26 angeordnet, die je mit einem Handgriff 27 versehen sind. Die Stäbe 26, die sich ihm Hohlraum 8 diametral gegenüberliegen, so daß sich das Mischorgan 28 im Hohlraum nicht verkannten und verklemmen kann, sind in Längsrichtung verschiebbar durch je eine Führungsöffnung im Verschlußdeckel 17 und im Verschlußring 22 geführt. In der Führungsöffnung befindet sich eine Ringnut 23, in die ein den jeweiligen Stab 26 umgreifender und damit den Hohlraum 8 an der Führunsöffnung abdichtender O-Ring 24 eingesetzt ist. Die das Mischorgan 28 bildende Ringscheibe kann im übrigen in der Zeichnung nicht dargestellte axiale Strömungsöffnungen enthalten, um die Vermischung der Komponenten 9, 10 zu begünstigen.

In den Ausführungsbeispielen 1 bis 4 sind die Rohre 6, 7 und entsprechend die Stäbe 26 vergleichsweise starr ausgebildet. In Fig. 5 dagegen ist das Futterrohr 3 flexibel und entsprechend einem gekrümmten Verlauf der Leitungen 1 durch Biegen anpassbar. Die beiden Rohre 6, 7 besitzen sieb- oder netzartige Rohrwände, wobei die Sieb- oder Maschenöffnungen die Austrittsöffnungen 13 bilden. Die Rohre 6, 7 können aus einem flächenhaften Sieb- oder Netzgebilde jeweils zum Rohr 6, 7 gebogen und an die aneinanderstoßenden oder sich überlappenden Längsrändern aneinander fixiert sein.

Während in den Fig. 1 und 2 die Rohre 6, 7 in Umfangsrichtung in sich einstückig geschlossen sind, besteht bei dem Ausführungsbeispiel nach Fig. 4 das Futterrohr 3 aus zwei Rohrschalen 3.1, 3.2 , wozu das Futterrohr 3 längs einer Axialebene unterteilt und die Rohrschalen an ihren Längsrändern lösbar miteinander verbunden sind. Im Ergebnis können die beiden Rohrschalen 3.1, 3.2 von der Seite her über die Leitung 1 zusammengelegt und miteinander verbunden werden, so daß die erfindungsgemäße Durchführungsvorrichtung auch bei bereits liegenden Leitungen 1 auf einfache Weise montiert werden kann. Die Rohrschalen 3.1, 3.2 werden an ihren Längsrändern in einer Nut- und Federverbindung 102 zusammengesteckt und sind im zusammengesteckten Zustand durch Spannbänder 103 zusammengehalten, die das Futterrohr 3 auf seiner Außenseite umschließen und die Rohrschalen 3.1, 3.2 gegeneinander verspannen.

## Patentansprüche

1. Vorrichtung zur Durchführung von Leitungen (1), wie Kabel oder Rohre, durch eine Wandöffnung (2) mit einem in die Wandöffnung (2) einsetzbaren Futterrohr (3), dessen Wandung eine zu beiden Seiten der Wand (5) mündende und die Leitungen (1) aufnehmende Durchgangsöffnung (4) umschließt, dadurch gekennzeichnet, daß die Wandung des Futterrohrs (3) einen Hohlraum (8) aufweist, in dem sich, getrennt voneinander, die Komponenten (9, 10) eines bei ihrer Durchmischung expandierenden und im expandierten Zustand sich verfestigenden Zwei- oder Mehrkomponenten-Kunststoffschaums befinden, daß ferner im Hohlraum (8) eine von außen betätigbare Vorrichtung zur Vereinigung und Durchmischung der Komponenten (9, 10) vorgesehen ist, und daß in der Wandung des Futterrohrs (3) mindestens eine, mit dem Hohlraum (8) in Verbindung stehende und nach außen mündende Austrittsöffnung (13) vorgesehen ist, durch die der entstehende und expandierende Kunststoffschaum aus dem Hohlraum (8) nach außen austritt, wobei die Austrittsöffnung (13) so am Futterrohr (3) angeordnet ist, daß der austretende Kunststoffschaum sowohl die Durchgangsöffnung (4) als auch den Ringraum (11) zwischen der Wand (5) und dem Futterrohr (3) verschließt.

2. Vorrichtung nach Anspruch 1, dadurch gekennzeichnet, daß die Austrittsöffnung (13) mit einem sich unter dem Druck des expandierenden Kunststoffschaums öffnenden Verschluß versehen ist.

3. Vorrichtung nach Anspruch 1 oder 2, dadurch gekennzeichnet, daß die Austrittsöffnung (13) mit oder ohne Verschluß zu mehreren in über die Wandung des Futterrohrs (3) verteilter Anordnung vorgesehen ist.

4. Vorrichtung nach einem der Ansprüche 1 bis 3, dadurch gekennzeichnet, daß das Futterrohr (3) flexibel und entsprechend einem gekrümmten Verlauf der Leitungen (1) biegbar ist.

5. Vorrichtung nach einem der Ansprüche 1 bis 4, dadurch gekennzeichnet, daß das Futterrohr (3) aus zwei ineinander angeordneten Rohren (6, 7) unterschiedlichen Durchmessers gebildet ist, die zwischen sich den im Querschnitt ringförmigen und an den Enden (15, 16) der Rohre (6, 7) geschlossenen Hohlraum (8) einschließen.

6. Vorrichtung nach Anspruch 5, dadurch gekennzeichnet, daß die beiden Rohre (6, 7) sieb- oder netzartige Rohrwände aufweisen, wobei die Sieb- oder Maschenöffnungen die Austrittsöffnungen (13) bilden.

7. Vorrichtung nach Anspruch 6, dadurch gekennzeichnet, daß die beiden Rohre (6, 7) zumindest im Bereich eines ihrer Enden einen formstabilen Querschnitt besitzen und dort durch einen ringförmigen Rohrboden (12) verbunden sind, der den Hohlraum (8) zwischen den Rohren (6, 7) abschließt.

8. Vorrichtung nach Anspruch 7, dadurch gekennzeichnet, daß die Austrittsöffnungen (13) in der Wand des inneren und des äußeren Rohres (6, 7) vorgesehen sind.

9. Vorrichtung nach Anspruch 8, dadurch gekennzeichnet, daß die Austrittsöffnungen (13) über den Umfang und zumindest über den mittleren Bereich der Längserstreckung der Rohr (6, 7) verteilt angeordnet sind.

10. Vorrichtung nach Anspruch 8 oder 9, dadurch gekennzeichnet, daß die Austrittsöffnungen (13) im Rohrboden (12) angeordnet sind.

11. Vorrichtung nach einem der Ansprüche 8 bis 10, dadurch gekennzeichnet, daß der Verschluß der Austrittsöffnungen (13) durch darin sitzende und unter dem Druck des expandierenden Kunststoffschaums herausdrückbare Stopfen gebildet ist.

12. Vorrichtung nach Anspruch 7, dadurch gekennzeichnet, daß die Austrittsöffnung (13) von der ringförmigen Mündung des Hohlraums (8) an einem Ende (15) der Rohre (6, 7) und der Verschluß von dem an dieser Mündung befindlichen Rohrboden (12) gebildet ist, der unter dem Druck des expandierenden Kunststoffschaums von den Rohrenden (15) abdrückbar ist.

13. Vorrichtung nach Anspruch 12, dadurch gekennzeichnet, daß der Rohrboden (12) abgedichtet gegen die Rohrwände zwischen den Rohren (6, 7) nach Art eines Kolbenrings verschiebbar geführt ist.

14. Vorrichtung nach Anspruch 12, dadurch gekennzeichnet, daß der Rohrboden (12) durch eine gegen die Rohrwände abdichtende, verschiebbar über das Ende (15) der Rohre (6, 7) gestülpte Ringkappe (14) gebildet ist.

15. Vorrichtung nach einem der Ansprüche 1 bis 14, dadurch gekennzeichnet, daß an dem von außerhalb der Wand zugänglichen, insbesondere an dem dem Rohrboden (12) gegenüberliegenden Ende (16) des Futterrohrs (3) ein die Durchgangsöffnung (4) abdeckender Verschlußdeckel (17) mit einem Durchlaß für die Leitungen (1) vorgesehen ist.

16. Vorrichtung nach Anspruch 15, dadurch gekennzeichnet, daß der Verschlußdeckel (17) aus elastisch verformbarem Material besteht und daß der Durchlaß von flexiblen Zungen (19) gebildet ist, die durch vom Mittelpunkt (18) ausgehende und nach außen verlaufende Schlitze im Verschlußdeckel (17) freigeschnitten sind.

17. Vorrichtung nach Anspruch 15 oder 16, dadurch gekennzeichnet, daß der Verschlußdeckel (17) auf der dem Futterrohr (3) zugewandten Seite einen Ringflansch aufweist, mit dem der Verschlußdeckel (17) auf das Futterrohr (3) aufsteckbar ist.

18. Vorrichtung nach Anspruch 17, dadurch gekennzeichnet, daß der Ringflansch (20) zum Abdichten des Ringraums (11) zwischen dem äußeren Rohr (6) und der Wand (5) ausgebildet ist und aus elastisch verformbarem Material besteht.

19. Vorrichtung nach einem der Ansprüche 15 bis 18, dadurch gekennzeichnet, daß der Verschlußdeckel (17) einen größeren Außenquerschnitt als der Innenquerschnitt der Wandöffnung (2) aufweist.

20. Vorrichtung nach einem der Ansprüche 17 bis 19, dadurch gekennzeichnet, daß den Ringflansch (20) und den Verschlußdeckel (17) durchsetzende Entlüftungslöcher (21) vorgesehen sind.

21. Vorrichtung nach einem der Ansprüche 15 bis 20, dadurch gekennzeichnet, daß an dem den Verschlußdeckel (17) aufweisenden Ende (16) des Futterrohs (3) zwischen dem inneren und dem äußeren Rohr (6, 7) ein den Hohlraum (8) abdichtender Verschlußring (22) angeordnet ist.

22. Vorrichtung nach einem der Ansprüche 1 bis 21, dadurch gekennzeichnet, daß die Komponenten (9, 10) des Kunststoffschaums in axialer und/oder radialer Richtung des Futterrohrs (3) geschichtet oder räumlich ineinander angeordnet und durch leicht zerreißbare Folien voneinander getrennt sind.

23. Vorrichtung nach einem der Ansprüche 1 bis 22, dadurch gekennzeichnet, daß die Vorrichtung zur Vereinigung und Durchmischung der Komponenten (9, 10) ein den Hohlraum (8) über seinen gesamten Bereich überstreichendes Mischorgan (28) aufweist, das von außen bewegbar oder zu seiner Bewegung von außen auslösbar ist, und das bei seiner Bewegung die Folien (100) zerreißt und die Komponenten (9, 10) im Hohlraum (8) miteinander vermischt.

24. Vorrichtung nach Anspruch 23, dadurch gekennzeichnet, daß das Mischorgan (28) am Ende mindestens eines in den Hohlraum (8) hineinragenden und von außerhalb des Hohlraums betätigbaren Stabes (26) angeordnet ist.

25. Vorrichtung nach Anspruch 24, dadurch gekennzeichnet, daß das Mischorgan (28) als zwischen dem inneren und dem äußeren Rohr (6, 7) axial verschiebbare Ringscheibe ausgebildet ist, die mit Spitzen oder Schneiden zum Zerreißen der Folien (100) versehen ist.

26. Vorrichtung nach Anspruch 18, dadurch gekennzeichnet, daß im Mischorgan (28) axiale Strömungsöffnungen vorgesehen sind.

27. Vorrichtung nach einem der Ansprüche 24 bis 26, dadurch gekennzeichnet, daß in Verbindung mit den Merkmalen der Ansprüche 15 bis 21 der starr oder biegsam ausgebildete Stab (26) in Längsrichtung verschiebbar durch eine Öffnung (25) im Verschlußdeckel (17) und im Verschlußring (22) geführt ist.

28. Vorrichtung nach Anspruch 21, dadurch gekennzeichnet, daß im Verschlußring (22) eine Ringnut (23) angeordnet ist, in die ein den Stab (26) umgreifender und damit den Hohlraum (8) an der Öffnung (25) abdichtender O-Ring (24) eingesetzt ist.

29. Vorrichtung nach einem der Ansprüche 24 bis 28, dadurch gekennzeichnet, daß der Stab (26) zu mehreren in über den Umfang des Futterrohrs (3) verteilter Anordnung vorgesehen ist.

30. Vorrichtung nach einem der Ansprüche 1 bis 29, dadurch gekennzeichnet, daß das Futterrohr (3) längs einer Axialebene in Rohrschalen (3.1, 3.2) unterteilt und die Rohrschalen lösbar miteinander verbunden sind.

31. Vorrichtung nach Anspruch 30, dadurch gekennzeichnet, daß die Rohrschalen (3.1, 3.2) an ihren Längsrändern in einer Nut- und Federverbindung (102) zusammensteckbar und im zusammengesteckten Zustand durch das Futterrohr (3) außen umschließende Spannbänder (103) gegeneinander verspannt sind.
